# EUROPEAN PATENT SPECIFICATION

(11) **EP 0 693 173 B1**
(45) Date of publication and mention of the grant of the patent: **16.09.1998**
(21) Application number: 94913207.0
(22) Date of filing: 31.03.1994
(51) Int. Cl.: G01C 9/14, G01C 15/00

(54) **INTERMITTENTLY ACTUATED PLUMB PENDULUM FLUID BEARING MEANS**
FLUIDLAGER FÜR INTERMITTIEREND ANREGBARES PENDELBARES LOT
DISPOSITIF D'APPUI A ACTIONNEMENT INTERMITTENT POUR CORPS A PLOMB MONTE PENDULAIRE DANS UN FLUIDE

(30) Priority: 05.04.1993 NL 9300591
(43) Date of publication of application: 24.01.1996
(73) Proprietor: L.TH.M. DULLAERT AGENTUREN- EN COMMISSIEHANDEL B.V., NL-7201 NM Zutphen (NL)
(72) Inventor: DULLAERT, Leonardus, Theodorus, Maria, NL-7201 NM Zutphen (NL)
(74) Representative: Iemenschot, Johannes Andreas, Ir.
(86) International application number: NL9400070
(87) International publication number: WO9423271

(56) References cited:
- DE-A- 3 030 001
- DE-A- 3 932 044
- DE-C- 848 574
- US-A- 3 936 197
- SOVIET INVENTIONS ILLUSTRATED Week 8736, 16 September 1987 Derwent Publications Ltd., London, GB; AN 87-255501 & SU,A,1 285 144 (EARTH PHYS SHMIDT) 23 January 1987

## Description

The present invention relates to a device comprising a base and a body which is supported by means of a bearing means in pendulum fashion relative to the base, and means for bringing the body into the vertical position out of an initial position by bringing the body out of the initial position, in which the body is being held in a stationary state relative to the base, into a freely swinging state at least once for a predetermined period of time which is related to the swing time of the body, and for subsequently bringing the body back into the stationary state.

SU 1 166 032-A, on which document the preamble of claim 1 is based, discloses a device wherein pressurized air is fed between the spherical concave surface of the base and the mating convex surface of the body via a conduit in the base, whereby the body is raised from the base. The floating body then moves towards its vertical position. When the feeding of air is interrupted the body sinks onto the base and is then locked by a locking screw.

SU 1 285 144-A discloses a similar device wherein pressurized air is fed between the spherical concave surface of the base and the mating convex surface of the body via a conduit in the body, whereby the body is raised from the base and the floating body moves towards its vertical position. When the feeding of air is interrupted the body sinks onto the base and is then locked.

The object of the present invention is to provide a simple, sturdy and reliable device of which the body can rapidly obtain a highly accurate vertical position.

This object is achieved by providing a device according to claim 1. The vent line allows a fast elimination of the layer of medium between the two surfaces. Preferably the valves are electrically operated valves. The two surfaces can be circular segment-shaped, so that the body can move in a single plane, e.g. for an angle measuring instrument, or spherical surfaces, so that the body can perform a spatial movement, e.g. for a leveling instrument. The medium supplied to the bearing means can be a gas, such as compressed air, or even a fluid. Preferably the medium supplied to the bearing means is compressed air. The presence of a thin layer of this medium between the two surfaces, which can be brought about in a simple manner as the following description will clearly show, provides a virtually frictionless bearing arrangement between the body and the base. Also the contact area between the body and the base can be chosen as large as necessary to support a load to be placed on the body. Furthermore a large contact area will avoid any occurence of wear of the interacting surfaces. The body of the inventive device can provide a horizontal platform for a land surveying instrument.

It is also advantageous for the device to have means for locking the body relative to the base. This ensures that the vertical position of the body obtained with the desired accuracy can be fixed, so that it cannot be disturbed and the body can act as a stable platform. The means for locking the body to the base can consist of, for example, mechanical clamping means, magnetic means, or the application of a partial vacuum to the earlier described bearing means.

To obtain a rapid approximation of the vertical position of the body the feed means are designed for bringing the body into the freely swinging state more than once for a period of time which is shorter than half the swing time of the body, and for subsequently bringing the body back into the stationary state.

When the means are designed for bringing the body into the freely swinging state at least once for a period of time which is no more than one fourth of the swing time of the body, and for subsequently bringing the body back into the stationary state, a very rapid approximation of the vertical position is obtained, since the centre of gravity of the body approaches the vertical line from one side.

It is advantageous for the design of the device if all periods of time in which the body is brought in the freely swinging state are of equal length.

The invention will be explained in greater detail below with reference to the appended drawing of examples of embodiments of the device according to the invention, in which:
Fig. 1 is an illustration of land surveying equipment comprising an example of an embodiment of the device according to the invention;
Fig. 2 shows a vertical section of a part of the device in Fig. 1;
Fig. 3 is a diagrammatic illustration of the air supply means of the device in Fig. 1;
Fig. 4 is a view of the control signals for the valves of the air supply means in Fig. 3.

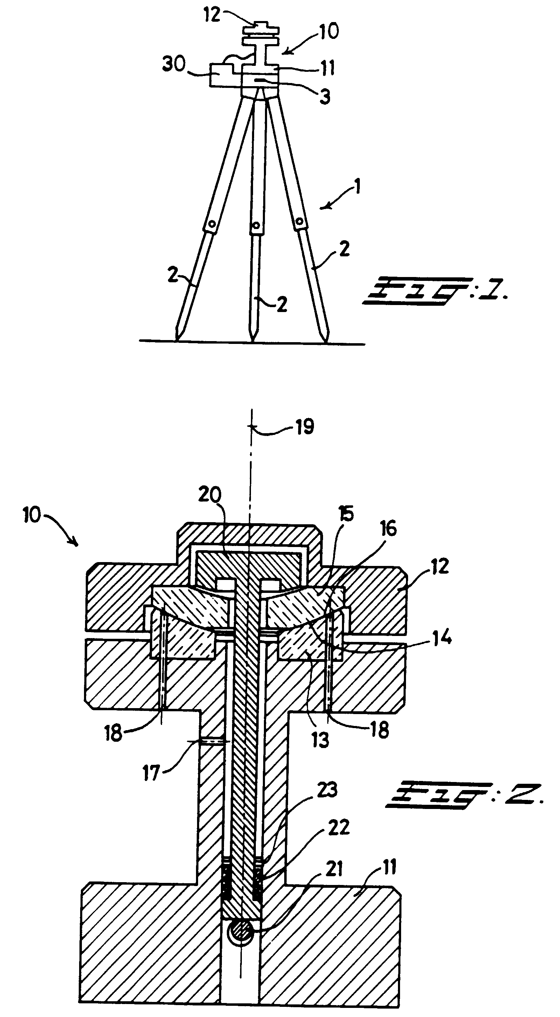

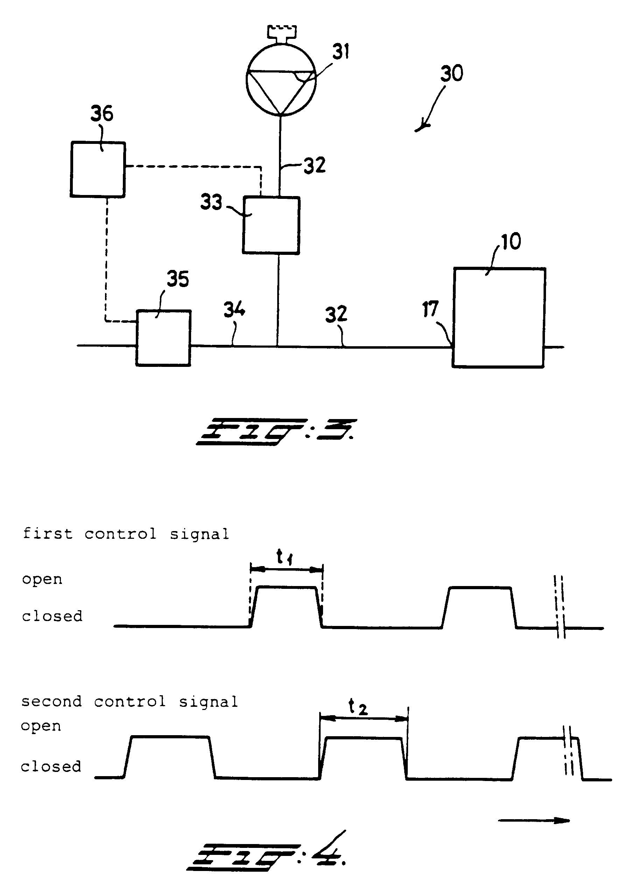

Fig. 1 shows a device 10 according to the invention placed on a tripod 1 with three legs 2. The tripod 1 is provided with conventional adjusting means for making a provisional level setting of the top part thereof, for example with an accuracy of 1° - 2°. This level position can be checked by the user by means of the indicator 3, which operates with an air bubble. The device 10 comprises a detachable base 11 which can be fixed on the tripod 1, and a body 12 which can be supported through bearing means in pendulum fashion relative to the base 11. After the body 12 has been brought into the vertical position in the manner described below, and after the body 12 has been locked relative to the base 11, a land surveying instrument, for example, can be placed on top of the body 12. The construction and the mode of operation of the device 10 are explained below with reference to Figs. 2, 3 and 4.

In Fig. 2 it can be seen that the base 11 is provided with an annular element 13 which has an essentially spherical surface 14. The body 12 is provided with an annular element 15 with an essentially spherical surface 16. The radii of curvature of the two surfaces 14 and 16 are the same, so that the body 12 is supported relative to the base 11 in the manner of a ball joint which is rotatable in all directions. When compressed air is fed in to a connection aperture 17 of the base 11 by means of air supply means 30 belonging to the device, which means will be described below with reference to Fig. 3, air passes through the central cavity in the base 11 and goes between the two surfaces 14 and 16. This causes the surface 16 to move up a very small distance relative to the surface 14. Another gas, or even a liquid, could be used instead of air. Channels 18, distributed around the surface 14, and in communication with the environment, open out near the outside edge of the surface 14. Some of the air fed in between the surfaces 14 and 16 escapes through the channels 18 to the environment. The air layer obtained through the infeed of air between the two surfaces 14 and 16 causes the body 12 to move without friction relative to the base 11, as if the body 12 were suspended in an imaginary hinge point 19. The position of the hinge point 19 corresponds to the centre point of the radii of curvature of the surfaces 14 and 16. If the centre of gravity of the body 12 is not situated exactly below the hinge point 19, viewed in the vertical direction, when air is fed in the body 12 will carry out a pendulum movement relative to the hinge point 19. In the example of an embodiment shown, the body 12 is designed in such a way that the swing frequency of the element is 2 Hz, and the swing time is therefore 0.500 second.

The infeed of compressed air to the connection aperture 17 of the base 11 is achieved by means of air supply means 30, shown diagrammatically in Fig. 3. The air supply means 30 comprise a small electrically driven air pump 31, which is provided with an air filter at its suction side. The air pump 31 is capable of placing ambient air under slight excess pressure, for example 0.3 bar excess pressure. In an embodiment not shown, a pump or hand bellows which can be manually operated by the user of the device can be provided for the purpose of pressurizing the medium, or the medium can be stored in a pressurized container. The pump 31 is connected to the connection aperture 17 by means of a supply line 32. The supply line 32 accommodates an electrically operated valve 33, which can open and close the supply line 32. At a point between the valve 33 and the connection aperture 17, a vent line 34 is connected to the supply line 32. The vent line 34 accommodates an electrically operated valve 35, which can open and close the line 34. Both valves 33 and 35 are closed when not in operation. An electrical control device 36 is provided for the operation of the valves 33 and 35. Said device 36 can supply a first and a second control signal to the valves 33, 35 respectively.

Fig. 4 gives an example of the first and the second control signal. For use of the device 10, after the pump 31 is put into operation, a starting signal is given by the user to the control device 36. The control device 36 then supplies the second control signal to the valve 35, with the result that it opens the vent line 34, and any air still present disappears between the surfaces 14 and 16 of the base 11 and the body 12. After a short waiting time has elapsed following closure of the valve 35, the control device 36 feeds the first control signal to the valve 33, with the result that compressed air passes between the surfaces 14 and 16 and the body 12 is brought into a freely swinging state relative to the base 11. The time period tl during which compressed air is fed in is 0.100 sec. in the example shown. This corresponds to one fifth of the swing time of the body 12. If the valve 35 is opened, the air pressure quickly decreases, and the surfaces 14 and 16 come to rest on each other. The valve 35 remains open during a time period t2 of, for example, 0.150 sec. This means that the body 12 is in the stationary state again relative to the base 11. This cycle can be repeated a number of times, for example four times. If the line through the imaginary hinge point 19 and the centre of gravity of the body 12 in the initial position has an angular deviation W of 1° relative to the vertical, the final angular position W4 is reached by way of the successive angular positions W1, W2, W3. So, there is an approximation of the vertical position in four steps, as shown in the table below.
step 1: W1 = (0.125 - 0.100)/0.125 * 1.000° = 0.2000°
step 2: W1 = (0.125 - 0.100)/0.125 * 0.200° = 0.0400°
step 3: W1 = (0.125 - 0.100)/0.125 * 0.040° = 0.0080°
step 4: W1 = (0.125 - 0.100)/0.125 * 0.008° = 0.0016°

The above table shows that with the device according to the invention the vertical position of the body 12 is reached with great accuracy already after about one second. For even greater accuracy, it is, of course, possible to carry out more repetitions. The period of time during which the body 12 is in the freely swinging state could also be selected so that it differs from step to step. In any case, the device according to the invention provides the user with a clear insight into the accuracy which can be achieved.

It will be clear that the operating time t1 of the valve 33 and the period of time during which the body 12 is in the freely swinging state need not correspond exactly. On the one hand, the relation between these two values could be set at the factory while, on the other hand, it is clear that through use of the approximation method the vertical position can be reached quickly and with very great accuracy, despite a slight deviation between these two values.

After reaching the vertical position with the accuracy desired by the user, the body 12 is locked firmly on the base 11 with the aid of a clamp 20 (Fig. 2). The clamp 20 is operated by rotating an eccentric cam mechanism 21. A spring 22 ensures that the rod of the clamp 20 is always pressed against the eccentric cam mechanism 21. A seal 23 is also placed along the rod of the clamp, thus preventing air fed in through the connection aperture 17 from escaping by this route.

It is clear that the above description reflects only one potential application of the device according to the invention. Another application could be an angle measuring device, in which the angular position of the base relative to the body in the vertical position is measured. It will also be clear that the base need not be stationary. If the base undergoes a slow movement relative to the swing time of the body, the body can be brought into the vertical position with great accuracy using the device according to the invention.

## Claims

1. Device comprising a base (11) and a body (12), which is supported by means of a bearing means in pendulum fashion relative to the base, the bearing means comprising two spherical surfaces (16,14) defined by a substantially common radius of curvature and bounded by the base (11) and the body (12) respectively, and means for bringing the body into the vertical position out of an initial position by bringing the body out of the initial position, in which the body is being held in a stationary state relative to the base, into a freely swinging state at least once for a predetermined period of time which is related to the swing time of the body, and for subsequently bringing the body back into the stationary state, wherein the means for bringing the body into the vertical position comprise feed means (30) for feeding a medium between the two surfaces for a predetermined period of time which is related to the swing time of the body to bring the body out of the stationary state, in which the two surfaces are contacting each other, into the freely swinging state, in which the medium forms a layer between the two surfaces (16,14), the feed means (30) comprising a first valve (33) which can open and close a supply line (32) for the medium connected to a central cavity in the base for feeding the medium between the two surfaces (16,14), the device being **characterized in that** channels (18) are provided, which are distributed around the central cavity in the base and connect the spherical surface (14) to the environment, and in that the feed means (30) comprise a second valve (35) which can open and close a vent line (34) connecting the supply line (32) at a point between the first valve (33) and the bearing means (14,16) to the environment and control means (36) for opening the two valves (33,35) alternately.

2. Device according to claim 1, **characterized in that** the medium is compressed air.

3. Device according to one or more of the preceding claims, **characterized in that** the device (10) comprises means (20) for locking the body (12) relative to the base (11).

4. Device according to one or more of the preceding claims, **characterized in that** the feed means (30) are designed for bringing the body (12) into the freely swinging state more than once for a period of time which is shorter than half the swing time of the body, and for subsequently bringing the body back into the stationary state.

5. Device according to one or more of the preceding claims, **characterized in that** the feed means (30) are designed for bringing the body (12) into the freely swinging state at least once for a period of time which is no more than one fourth of the swing time of the body, and for subsequently bringing the body back into the stationary state.

## Patentansprüche

1. Vorrichtung, die einen Untersatz (11) und einen Körper (12) umfaßt, der über eine Lagerungseinrichtung pendelartig in bezug auf den Untersatz getragen wird, wobei die Lagerungseinrichtung zwei gewölbte Flächen (16, 14) umfaßt, die durch einen im wesentlichen gemeinsamen Krümmungsradius gebildet und durch den Untersatz (11) bzw. den Körper (12) begrenzt werden, sowie eine Einrichtung, mit der der Körper aus einer Ausgangsposition in die vertikale Position gebracht wird, indem der Körper aus der Ausgangsposition, in der der Körper in einem stationären Zustand in bezug auf den Untersatz gehalten wird, wenigstens einmal über einen vorgegebenen Zeitraum, der im Zusammenhang mit Schwingzeit des Körpers steht, in einen freischwingenden Zustand gebracht wird, und mit der der Körper anschließend wieder in den stationären Zustand gebracht wird, wobei die Einrichtung, mit der der Körper in die vertikale Position gebracht wird, eine Fördereinrichtung (30) umfaßt, die über einen vorgegebenen Zeitraum, der im Zusammenhang mit Schwingzeit des Körpers steht, ein Medium zwischen die zwei Flächen fördert, um den Körper aus dem stationären Zustand, in dem die beiden Flächen miteinander in Kontakt sind, in den freischwingenden Zustand zu bringen, in dem das Medium eine Schicht zwischen den beiden Flächen (16, 14) bildet, wobei die Fördereinrichtung (30) ein erstes Ventil (33) umfaßt, das eine Zuführleitung (32) für das Medium öffnen und schließen kann, die mit einem mittigen Hohlraum in dem Untersatz verbunden ist, um das Medium zwischen die zwei Flächen (16, 14) zu fördern, wobei die Vorrichtung **dadurch gekennzeichnet ist**, daß Kanäle (18) vorhanden sind, die um den mittigen Hohlraum in dem Untersatz herum verteilt sind und die gewölbte Fläche (14) mit der Umgebung verbinden, und dadurch, daß die Fördereinrichtung (30) ein zweites Ventil (35) umfaßt, das eine Entlüftungsleitung (34) öffnen und schließen kann, die die Zuführleitung (32) an einem Punkt zwischen dem ersten Ventil (33) und der Lagerungseinrichtung (14, 16) mit der Umgebung verbindet, sowie eine Steuereinrichtung (36), die die zwei Ventile (33, 35) abwechselnd öffnet.

2. Vorrichtung nach Anspruch 1, **dadurch gekennzeichnet**, daß es sich bei dem Medium um Druckluft handelt.

3. Vorrichtung nach einem oder mehreren der vorangehenden Ansprüche, **dadurch gekennzeichnet**, daß die Vorrichtung (10) eine Einrichtung (20) zum Arretieren des Körpers (12) in bezug auf den Untersatz (11) umfaßt.

4. Vorrichtung nach einem oder mehreren der vorangehenden Ansprüche, **dadurch gekennzeichnet**, daß die Fördereinrichtung (30) so aufgebaut ist, daß sie den Körper (12) mehr als einmal über einen Zeitraum, der kürzer ist als die Hälfte der Schwingzeit des Körpers, in den freischwingenden Zustand bringt und den Körper anschließend wieder in den stationären Zustand bringt.

5. Vorrichtung nach einem oder mehreren der vorangehenden Ansprüche, **dadurch gekennzeichnet**, daß die Fördereinrichtung (30) so aufgebaut ist, daß sie den Körper (12) wenigstens einmal über einen Zeitraum, der nicht mehr als ein Viertel der Schwingzeit des Körpers beträgt, in den freischwingenden Zustand bringt und den Körper anschließend wieder in den stationären Zustand bringt.

## Revendications

1. Dispositif comportant une base (11) et un corps (12), qui est supporté à l'aide de moyens à palier à la manière d'un pendule par rapport à la base, les moyens à palier comportant deux surfaces (16, 14) sphériques définies par un rayon de courbure sensiblement commun et délimitées par la base (11) et le corps (12) respectivement, et des moyens destinés à amener le corps en la position verticale à partir d'une position initiale en faisant passer le corps hors de la position initiale, dans laquelle le corps est maintenu dans un état stationnaire par rapport à la base, à un état de balancement libre au moins une fois pendant un laps de temps déterminé à l'avance qui est en relation avec le temps de balancement du corps, et pour ramener ensuite le corps à l'état stationnaire, les moyens destinés à amener le corps en la position verticale comportant des moyens (30) d'alimentation destinés à envoyer un fluide entre les deux surfaces pendant un laps de temps déterminé à l'avance qui est en relation avec le temps de balancement du corps pour amener le corps hors de l'état stationnaire, dans lequel les deux surfaces sont en contact l'une avec l'autre, dans l'état de balancement libre, dans lequel le fluide forme une couche entre les deux surfaces (16, 14), les moyens (30) d'alimentation comportant une première vanne (33) qui peut ouvrir et fermer une ligne (32) d'alimentation en le fluide communiquant avec une cavité centrale de la base pour envoyer le fluide entre les deux surfaces (16, 14), le dispositif étant caractérisé en ce qu'il est prévu des canaux (18), qui sont répartis autour de la cavité centrale de la base et relient la surface (14) sphérique à l'atmosphère extérieure, et en ce que les moyens (30) d'alimentation comportent une seconde vanne (35) qui peut ouvrir et fermer une ligne (34) de mise à l'atmosphère mettant la ligne (32) d'alimentation en communication en un point entre la première vanne (33) et les moyens (14, 16) à palier, avec l'atmosphère extérieure et des moyens (36) de commande destinés à ouvrir les deux vannes (33, 35) en alternance.

2. Dispositif suivant la revendication 1, caractérisé en ce que le fluide est de l'air comprimé.

3. Dispositif suivant l'une ou plusieurs des revendications précédentes, caractérisé en ce que les dispositifs (10) comportent des moyens (20) destinés à verrouiller le corps (12) par rapport à la base (11).

4. Dispositif suivant l'une ou plusieurs des revendications précédentes, caractérisé en ce que les moyens (30) d'alimentation sont conçus de manière à amener le corps (12) en l'état de balancement libre plus d'une fois, pendant un laps de temps qui est plus court que la moitié du temps de balancement du corps, et pour ramener ensuite le corps à l'état stationnaire.

5. Dispositif suivant l'une ou plusieurs des revendications précédentes, caractérisé en ce que les moyens (30) d'alimentation sont conçus de manière à amener le corps (12) en l'état de balancement libre au moins une fois, pendant un laps de temps qui n'est pas supérieur à un quart du temps de balancement du corps, et pour ramener ensuite le corps à l'état stationnaire.
